# FASCICULE DE BREVET EUROPEEN

(11) **EP 3 606 768 B1**
(45) Date de publication et mention de la délivrance du brevet: **30.06.2021**
(21) Numéro de dépôt: 18718614.3
(22) Date de dépôt: 04.04.2018
(51) Int. Cl.: B60C 11/12, B60C 11/01, B60C 11/00, B60C 11/13

(54) **PNEU A PERFORMANCES AMELIOREES**
REIFEN MIT VERBESSERTER LEISTUNG
TYRE WITH IMPROVED PERFORMANCES

(30) Priorité: 04.04.2017 FR 1770337
(43) Date de publication de la demande: 12.02.2020
(73) Titulaire: COMPAGNIE GENERALE DES ETABLISSEMENTS MICHELIN, 63000 Clermont-Ferrand (FR)
(72) Inventeur: BOURGEOIS, Frédéric, 63040 Clermont-Ferrand Cedex 9 (FR); HELLOT, Fabien, 63040 CLERMONT-FERRAND CEDEX 9 (FR)
(74) Mandataire: Lasson, Cédric Yves
(86) Numéro de dépôt international: PCT/FR2018/050846
(87) Numéro de publication internationale: WO 2018/185436

(56) Documents cités:
- WO-A1-2011/073312
- WO-A1-2011/073313
- FR-A1- 3 041 568
- JP-A- H04 345 504
- US-A1- 2016 237 259

## Description

### DOMAINE DE L'INVENTION

La présente invention concerne les pneus pour véhicule tourisme et plus particulièrement les bandes de roulement de ces pneus.

### Définitions :

Les conditions de référence du pneu sur sa jante de montage telles que définies par la norme européenne E.T.R.T.O. précisent la pression de gonflage correspondant à la capacité de charge maximale admissible du pneu ("*Load Index*" en anglais) indiquée par son indice de charge et son code vitesse. Toutefois, les conditions d'utilisation d'un pneu sur véhicule diffèrent des conditions de référence en ce que la charge portée est égale à environ 80% de la charge maximale admissible.

L'empreinte de contact du pneu avec la chaussée est obtenue pour le pneu à l'arrêt et monté sur une jante et aux conditions d'utilisation. On note S la surface totale de contact dans ces conditions, cette surface étant égale à la surface totale délimitée par le contour externe de l'empreinte de contact du pneu sous ses conditions de référence ; cette surface totale inclut les parties en creux.

Un bloc est un élément en relief formé sur une bande de roulement, cet élément étant délimité par des creux ou rainures et comprenant au moins deux parois latérales et une face de contact, cette dernière face de contact étant destinée à venir en contact avec la chaussée pendant le roulage.

Une nervure est un élément en relief formé sur une bande de roulement, cet élément étant délimité par deux rainures. Une nervure comprend deux parois latérales et une face de contact, cette dernière étant destinée à venir en contact avec la chaussée.

Par direction radiale, on entend une direction qui est perpendiculaire à l'axe de rotation du pneu (cette direction correspond à la direction de l'épaisseur de la bande de roulement).

Par direction axiale ou transversale, on entend une direction parallèle à l'axe de rotation du pneu.

Par direction circonférentielle, on entend une direction qui est tangente à tout cercle centré sur l'axe de rotation. Cette direction est perpendiculaire à la fois à la direction axiale et à une direction radiale.

Une découpure désigne soit une rainure soit une incision et correspond à l'espace délimité par des parois de matière se faisant face et distantes l'une de l'autre d'une distance moyenne, cette distance moyenne pouvant être nulle. Ce qui différencie une incision d'une rainure c'est précisément cette distance ; dans le cas d'une incision, cette distance est appropriée pour permettre la mise en contact au moins partielle des parois opposées lors du passage dans le contact avec la chaussée. Cette distance, pour une incision destinée à un pneu de véhicule de tourisme, est en règle générale, sur le pneu à l'état neuf, au plus égale à 2 millimètres (2 mm). Dans le cas d'une rainure, les parois de cette rainure ne peuvent pas venir en contact l'une contre l'autre pendant le roulage aux conditions d'utilisation.

### ÉTAT DE LA TECHNIQUE

Des bandes de roulement connues sont divulguées dans les documents WO 2011073312 A et FR 3041568 A.

Il est connu de pourvoir une bande de roulement d'un pneu destiné à équiper une voiture avec une pluralité de rainures d'orientation circonférentielle et transversales, ces rainures délimitant une pluralité d'éléments de relief formant une sculpture. La surface externe de ces éléments constitue une surface de roulement destinée à venir en contact avec une chaussée pendant le roulage. Les rainures et incisions forment un dessin de sculpture visible sur la surface de roulement à l'état neuf. Avec l'usure ce dessin peut se conserver ou se modifier.

Afin de pallier une baisse de rigidité lié à la présence de découpures, le document WO2001/60642 décrit des découpures de largeur au plus égale à 2mm et comportant sur une partie de leur surface une partie formant protubérance et réduisant localement la largeur de l'incision.

On a toutefois noté qu'en usage, avec ce type de pneu il pouvait se produire une pénétration de corps étrangers dans les incisions, ces corps étrangers pouvant par la suite migrer vers la structure interne de renforcement du pneu ce qui peut se révéler à terme défavorable sur le plan de l'endurance du pneu.

### BREF EXPOSÉ DE L 'INVENTION

La présente invention vise à réduire ce risque et à formuler une combinaison particulièrement résistante en usage.

À cet effet, l'invention a pour objet un pneu de véhicule tourisme comportant une bande de roulement formée dans au moins un matériau venant en contact avec une chaussée lors du roulage du pneu par l'intermédiaire d'une surface de roulement formant la surface externe de la bande, cette bande de roulement comportant des parties de bord délimitant axialement ladite bande, au moins une de ces parties de bord étant pourvue avec une pluralité de découpures d'orientation transversale ou oblique, ces découpures ayant une profondeur au moins égale à 75% de l'épaisseur de la bande de roulement destinée à être usée,

- plus de la moitié des découpures formées sur les parties de bord comprennent au moins une protubérance réduisant localement la largeur de la découpure à une largeur au moins égale à 0.2 mm et au plus à 0.5 mm. Cette largeur de la découpure est mesurée sur pneu neuf gonflé à sa pression d'usage.

Ce pneu, lorsqu'il est neuf, est tel que le matériau de la bande de roulement venant au contact avec la chaussée a les caractéristiques physiques suivantes :

- sa dureté Shore A, mesurée selon la norme ASTM 2240 ou DIN 53505, est au moins égale à 48 et au plus égale à 57,

- sa perte à 60 °C, perte d'énergie à 60 °C par rebond à énergie imposée mesurée au sixième choc et dont la valeur, exprimée en %, est la différence entre l'énergie fournie et l'énergie restituée, rapportée à l'énergie fournie, est au moins égale à 12% et au plus égale à 20%,

- sa température de transition vitreuse Tg, mesurée selon la norme ASTM D 5992-96, est au moins égale à -20°C et au plus égale à -10°C.

Un matériau satisfaisant les conditions revendiquées de dureté Shore A, de perte d'énergie et de température de transition vitreuse Tg peut être obtenu à l'intérieur de la famille des matériaux ayant fait l'objet de la demande de brevet publiée sous la référence WO 2015/185395-A1.

La température de transition vitreuse Tg d'un mélange élastomérique, température à laquelle le mélange élastomérique passe d'un état caoutchouteux déformable à un état vitreux rigide, est généralement déterminée lors de la mesure des propriétés dynamiques du mélange élastomérique, sur un viscoanalyseur (Metravib VA4000), selon la norme ASTM D 5992-96. La mesure des propriétés dynamiques est réalisée sur un échantillon de mélange élastomérique vulcanisé, c'est dire cuit jusqu'à un taux de conversion d'au moins 90%, l'échantillon ayant la forme d'une éprouvette cylindrique ayant une épaisseur égale à 2 mm et une section égale à 78,5 mm². On enregistre la réponse de l'échantillon de mélange élastomérique à une sollicitation sinusoïdale en cisaillement simple alterné, ayant une amplitude crête-crête égale à 0,7 MPa et une fréquence égale à 10 Hz. On effectue un balayage en température à vitesse de montée en température constante de +1.5°C/min. Les résultats exploités sont généralement le module complexe de cisaillement dynamique G*, comprenant une partie élastique G' et une partie visqueuse G", et la perte dynamique tgδ égale au rapport G"/G'. La température de transition vitreuse Tg est la température à laquelle la perte dynamique tgδ atteint un maximum lors du balayage en température.

Grâce à cette combinaison il est possible de réduire les forces de coincement en cas de pénétration de cailloux dans une incision notamment dans des conditions de roulage à basses températures.

Une découpure a une orientation oblique sur un pneu dès lors que l'angle de la trace de la découpure sur la surface de roulement de la bande de roulement avec la direction transversale est au plus égal à 45 degrés.

Il est précisé que, lorsqu'une découpure est pourvue avec au moins une protubérance réduisant localement sa largeur à une largeur au moins égale à 0.2 mm et au plus égale à 0.5 mm, la surface occupée par toutes les protubérances formées dans une découpure est au moins égale à 20% et au plus 80% de la surface d'une des faces délimitant ladite découpure et préférentiellement comprise entre 30 et 50%. Il est précisé que la surface de référence de la face délimitant la découpure est prise sur la partie de la découpure interagissant dans le contact avec la chaussée. La réduction locale de largeur de la découpure à une largeur au moins égale à 0.2 mm et au plus égale à 0.5 mm transforme localement cette découpure en incision dont les faces en vis-à-vis viennent en contact lors du passage dans le contact avec la chaussée en roulage.

Préférentiellement, la ou les protubérances d'une découpure sont localisées entre une profondeur de 15% et une profondeur de 70% de la profondeur maximale de la découpure pour conférer au pneu efficacité et pérennité.

Dans une variante, la ou les protubérances sont formées sur une même face délimitant la découpure.

Il est également possible de combiner la présence d'une pluralité de découpures pourvues de protubérances avec une autre pluralité de découpures dépourvues de telles protubérances.

Si la dureté Shore A est inférieure à 48, on affaiblit considérablement la capacité du fond des découpures à résister aux agressions. En effet, on constate que les gommes de basse dureté Shore résistent mal aux agressions et s'usent très rapidement ce qui peut se produire dès que des petits cailloux ont été captés par une incision.

Si la dureté Shore A mesurée à 23° est supérieure à 57, on augmente les forces de contact entre les parois d'une incision et un éventuel caillou pénétrant dans l'incision. Ceci va se traduire par une augmentation de la dimension moyenne des cailloux qui ne seront pas éjectés en roulage. Plus grandes sont les dimensions de ces cailloux et plus le phénomène d'agression du fond des incisions débute tôt dans la vie du pneumatique, ce qui peut se révéler à terme défavorable sur le plan de l'endurance du pneu et ainsi affecter la pérennité des performances.

Si la perte à 60 °C est inférieure à 12% le niveau de performance du pneu en adhérence humide est alors dégradé et ne satisfait plus à l'équilibre de performance recherché sur les pneus d'aujourd'hui et de demain.

Si la perte à 60 °C est supérieure à 20%, l'adhérence entre le caillou et les parois se faisant face augmente, ce qui conduit au même inconvénient qui a été décrit précédemment lorsque la dureté shore est supérieure à 57.

Si la température de transition vitreuse Tg est inférieure à -20°C, le pneu est trop typé pneu hivernal, ce qui n'est pas recherché pour une utilisation courante (toutes saisons).

Si la température de transition vitreuse Tg supérieure à -10°C : lors des périodes de froid, la rigidité du matériau augmente ce qui conduit au même inconvénient qui a été décrit précédemment lorsque la dureté shore est supérieure à 60. De plus gros cailloux peuvent restent coincés dans les incisions.

Préférentiellement, la dureté Shore A est au moins égale à 50 et au plus égale à 56.

De façon préférentielle, la perte à 60 °C du matériau de la bande de roulement est au moins égale à 15% et au plus égale à 20%. Cela permet d'obtenir la performance recherchée tout en conservant le compromis de performance des pneus modernes intégrant, notamment, de bonnes performances en adhérence humide.

De façon avantageuse, la température de transition vitreuse Tg du matériau de la bande de roulement est au moins égale à -16°C et au plus égale à -12°C. Cette plage de Tg est bien adaptée aux conditions climatiques des pays tempérés pour lesquels des températures négatives existent de manière épisodique. Cela permet d'obtenir la performance recherchée tout en conservant le compromis de performance des pneus modernes intégrant, notamment, de bonnes performances en adhérence humide par temps froids.

Par épaisseur totale de bande à user, on entend ici l'épaisseur maximale mesurée entre la surface de roulement à l'état neuf de la bande et les indicateurs de limite d'usure imposés par la législation. Ces indicateurs de limite d'usure ont une hauteur mesurée par rapport au fond des rainures de 1.6 mm en Europe. L'épaisseur totale à user s'obtient par différence entre la profondeur des rainures et hauteur des indicateurs de limite d'usure.

Préférentiellement, les incisions formées sur les bords de la bande de roulement ont une largeur au plus égale à 1 mm afin d'augmenter la capacité de ces incisions à se fermer lors du passage dans le contact avec la chaussée.

D'autres caractéristiques et avantages de l'invention ressortent de la description faite ci-après en référence aux dessins annexés qui montrent, à titre d'exemple non limitatif, une variante de réalisation de l'objet de l'invention.

### BRÈVE DESCRIPTION DES FIGURES

- La figure 1 montre une vue en plan partielle d'une bande de roulement schématique selon l'invention, cette bande de roulement comprenant une protubérance dans chaque découpure transversale formée sur les bords de cette bande de roulement ;

- La figure 2 montre une coupe méridienne selon une ligne II-II prise sur la figure 1 ;

- La figure 3 montre une vue surfacique d'une bande de roulement d'un pneu de dimension 205/55 R 16 réalisé selon l'invention.

### DESCRIPTION DES FIGURES

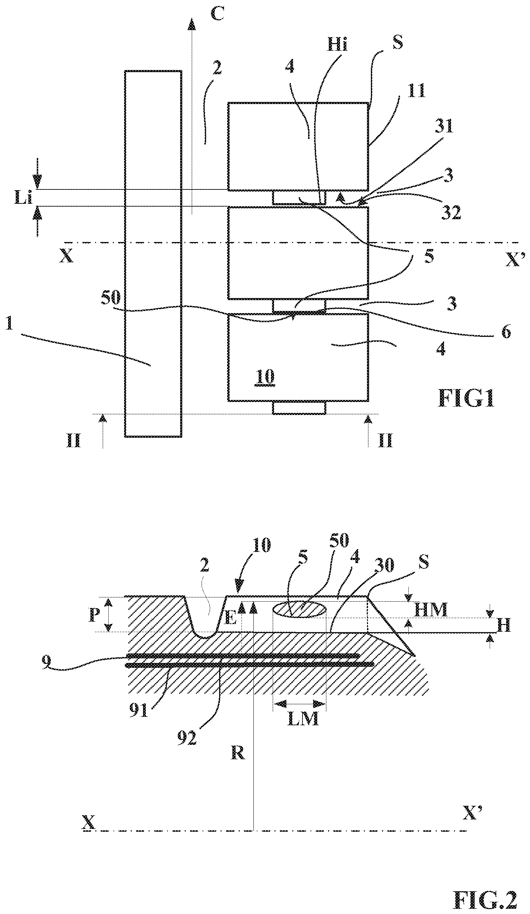

La figure 1 montre une vue en plan partielle d'une surface de roulement 10 d'une bande de roulement 1 et plus particulièrement d'une partie de bord 11 de la bande de roulement 1 d'un pneu pour usage sur un véhicule de tourisme selon l'invention.

Sur cette figure 1, on voit que la partie de bord 11 est délimitée axialement à l'intérieur par une rainure d'orientation circonférentielle 2 de largeur appropriée pour rester ouverte lors du passage dans le contact. La profondeur de cette rainure circonférentielle 2 est adaptée pour que lorsque la limite d'usure est atteinte, cette rainure puisse encore être active pour évacuer l'eau présente sur une chaussée par temps de pluie. Cette profondeur est en conséquence supérieure à l'épaisseur de matière de la bande de roulement destinée à être usée en roulage.

Cette partie de bord 11 est comporte une pluralité de découpures qui ont ici la forme d'incisions transversales 3 débouchant à la fois dans la rainure circonférentielle 2 et axialement vers l'extérieur de la bande. Ces incisions transversales 3 ont une largeur Li égale à 1.0 mm, cette largeur étant mesurée à neuf sur la surface de roulement entre les parois en vis-à-vis délimitant cette incision. Ces incisions transversales 3 ont une profondeur identique à la profondeur de la rainure circonférentielle 2. Chaque incision transversale 3 est orientée dans la bande de roulement de manière à ce que, sur la surface de roulement de la bande de roulement, sa trace soit parallèle à l'axe de rotation du pneu. Chaque incision transversale 3 est délimitée par des parois en vis-à-vis 31, 32, une desdites parois comprenant en saillie une protubérance 5. Ces incisions transversales découpent une pluralité de blocs 4.

Chaque protubérance 5 formée dans une incision transversale 3 comporte une surface active 50 (visible sur la figure 2) apte à venir en contact avec la paroi 32 de la rainure en vis-à-vis pendant le passage dans le contact avec le sol. La surface active de chaque protubérance 5 est séparée par une fente 6 mince de largeur Hi, cette largeur Hi étant mesurée sur le pneu dans un état non monté sur jante. La largeur Hi de la fente est dans le cas présent égale à 0.6 mm.

Comme on peut le voir sur la figure 2 montrant une coupe selon la ligne II-II portée sur la figure 1, ce pneu comprend une armature de sommet 9 formée par deux couches de renforcement 91, 92. Par ailleurs, chaque protubérance 5 d'une même incision transversale 3 a une longueur transversale maximale LM égale à au moins deux fois la hauteur maximale HM de cette protubérance prise dans la direction de la profondeur P de la rainure transversale.

En outre, l'aire de la surface active 50 de chaque protubérance, ici égale à l'aire de la section de chaque protubérance vu en coupe, est au moins égale à 10% et au plus égale à 50% de l'aire de la surface de paroi sur laquelle est formée la protubérance 5. Cette surface de paroi s'étend entre la rainure circonférentielle 2, le fond 30 de la rainure transversale 3 et un segment S, représenté en traits pointillés sur la figure 2, perpendiculaire à l'axe de rotation et passant par le point axialement le plus à l'extérieur du bloc 4 venant en contact avec la chaussée dans les conditions nominales d'usage du pneu.

En outre, il existe un passage pour l'eau entre la protubérance 5 et le fond 30 de l'incision transversale 3, ce passage ayant une hauteur H au moins égale à 10% de la profondeur P de l'incision transversale 3 (dans le cas présent cette hauteur H est égale à 40%).

Dans le cas de la protubérance 5 montrée, les points radialement les plus à l'extérieur sont situés à une distance R de l'axe de rotation repéré sur cette figure 2 par l'axe XX', ces mêmes points sont à une distance E de la nappe 92 radialement la plus à l'extérieur de l'armature de sommet 9. Cette protubérance est formée légèrement en décalage par rapport à la surface de roulement 10 de la bande de roulement.

L'aire d'une surface active est évaluée en projection selon la direction circonférentielle sur le plan méridien moyen, c'est-à-dire un plan passant par l'axe de rotation du pneu et par la position circonférentielle moyenne de la surface active. De même, l'aire de la surface de paroi sur laquelle est formée au moins une surface active est évaluée en projection selon la direction circonférentielle sur le plan méridien moyen de la rainure considérée.

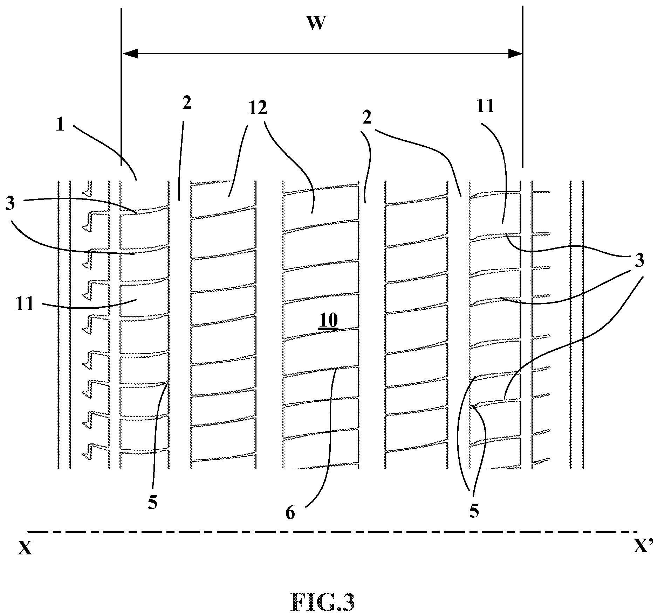

La figure 3 montre une vue surfacique d'une bande de roulement 1 d'un pneu de dimension 205/55 R 16.

Cette bande de roulement 1 est pourvue d'un dessin de sculpture comprenant quatre rainures circonférentielles 2 délimitant trois nervures intermédiaires d'orientation circonférentielle 12, ces nervures 12 étant délimitées axialement à l'extérieur par des parties de bord 11 délimitant axialement la bande de roulement sur sa largeur W.

Sur chaque nervure intermédiaire circonférentielle 12 il est formé une pluralité d'incisions obliques 6 de largeur d'ouverture moyenne égale à 0.8 mm.

Chaque partie de bord 11 comprend une pluralité d'incisions 3 d'orientation moyenne oblique faisant un angle moyen de l'ordre de 15° avec la direction transversale (c'est à dire avec l'axe de rotation du pneu figuré par l'axe XX' sur la figure). Ces incisions obliques 3 s'étendent sur toute la largeur de la partie de bord 11 et présentent une largeur d'ouverture égale à 0.8 mm. Localement, il est formé sur une des parois en vis-à-vis délimitant chacune des incisions obliques 3 des parties de bord 11 une protubérance 5 réduisant localement la largeur d'ouverture de l'incision à 0.3 mm. Cette protubérance 5 est formée près de la surface de roulement 10 de la bande de roulement (décalage vers l'intérieur égal à 1 mm) et au voisinage de la rainure circonférentielle 2. Cette protubérance 5 s'étend dans la direction de l'épaisseur de la bande de roulement jusqu'à une profondeur égale à 30% de la profondeur de l'incision 3.

Le taux de creux volumique transversal à neuf de la bande de roulement 1 exprime le pourcentage de volume de toutes les incisions 3, 6 d'orientation oblique (c'est à dire faisant un angle au plus égal à 45° avec la direction longitudinale ou circonférentielle sur le pneu) par rapport au volume de l'ensemble des creux qu'ils soient transversaux, obliques et circonférentiels. Dans la variante décrite, le taux de creux volumique total est égal à 23% tandis que le taux de creux volumique transversal à neuf de l'ensemble des incisions/rainures formées sur les nervures intermédiaires et sur les parties de bord est égal à 5%.

Cette bande de roulement est par ailleurs formée dans un matériau tel que décrit dans la demande WO 2015/185395-A1 et dont la formulation (en pce, c'est à dire en parties en poids pour cent parties de la matrice élastomère qui consiste en la totalité des élastomères présents dans la composition de caoutchouc) est donnée dans le tableau ci-après :

| **Composition** | pce |
|---|---|
| SBR (1) | 100 |
| noir de carbone (2) | 3 |
| silice (3) | 60 |
| résine (4) | 30 |
| cire antiozone | 1.8 |
| antioxydant (5) | 2.7 |
| silane (6) | 4.8 |
| Acide stéarique | 2 |
| CBS (7) | 2.3 |
| DPG (8) | 2 |
| soufre | 1 |
| ZnO | 1 |

(1) SBR avec 27% de motif styrène et 24% de motif 1,2 de la partie butadiénique (Tg = - 48°C) porteur d'une fonction silanol en extrémité de la chaîne élastomère ;
(2) Grade ASTM N234 (société Cabot) ;
(3) Silice « Zeosil 1165 MP » de la société Rhodia type « HDS »
(4) Résine coupe C5/coupe C9 ECR-373 de la société Exxon ;
(5) N-(1,3-diméthylbutyl)-N'-phényl-p-phénylènediamine, de la société Flexsys
(6) TESPT (« Si69 » de la société Degussa) ;
(7) N-cylohexyl-2-benzothiazol-sulfénamide (« Santocure CBS » de la société Flexsys)
(8) Diphénylguanidine (« Perkacit » DPG de la société Flexsys).

Ce matériau a, mesurées à cuit, les caractéristiques physiques suivantes :
- dureté Shore A, mesurée selon la norme ASTM 2240, à la température 23°C (+ ou 2 °C), une hygrométrie à 50% (+ ou - 10 %) et sous une charge de 50 N pendant un temps de mesure de 3 secondes, égale à 54,
- une perte d'énergie, mesurée à 60 °C dans un test de rebond à énergie imposée au sixième choc égale à 18%,
- une température de transition vitreuse Tg, mesurée selon la norme ASTM D 5992-96, égale à -14°C.

Grâce à cette combinaison de dessin de sculpture et de matériau de bande de roulement, il a été possible de réduire très sensiblement les risques liés à la capture d'objets pouvant devenir agressif dans la bande de roulement en réduisant la part de creux transversaux tout en atteignant des performances de résistance au roulement particulièrement intéressantes.

L'invention bien qu'ayant été décrite à l'aide de deux exemples, il doit être compris qu'elle n'est en rien limitée à ces exemples et qu'elle peut faire l'objet de modifications en restant dans la portée des revendications.

## Revendications

1. Bande de roulement (1) pour pneu de véhicule tourisme, cette bande de roulement étant formée dans au moins un matériau venant en contact avec une chaussée lors du roulage du pneu par l'intermédiaire d'une surface de roulement (10) formant la surface externe de la bande, cette bande de roulement comportant des parties de bord (11) délimitant axialement ladite bande de roulement, au moins une de ces parties de bord étant pourvues avec une pluralité découpures (3) d'orientation transversale ou oblique ayant une largeur au plus égale à 2 mm et une profondeur au moins égale à 75% de l'épaisseur de la bande de roulement destinée à être usée, plus de la moitié des découpures (3) formées sur les parties de bord comprenant au moins une protubérance réduisant localement la largeur de cette découpure (3) à une largeur au moins égale à 0.2 mm et au plus égale à 0.5 mm, cette bande de roulement étant **caractérisée en ce que** le matériau qui la compose pour venir au contact avec la chaussée à neuf est choisi pour avoir les caractéristiques physiques suivantes :
- une dureté Shore A, mesurée selon la norme ASTM 2240 ou DIN 53505, à la température 23°C, au moins égale à 48 et au plus égale à 57,
- une perte à 60 °C au moins égale à 12% et au plus égale à 20%, perte d'énergie à 60 °C par rebond à énergie imposée mesurée au sixième choc et dont la valeur, exprimée en %, est égale à la différence entre l'énergie fournie et l'énergie restituée rapportée à l'énergie fournie,
- une température de transition vitreuse Tg, mesurée selon la norme ASTM D 5992-96, au moins égale à -20°C et au plus égale à -10°C.

2. Bande de roulement (1) selon la revendication 1 **caractérisée en ce que** la dureté Shore A du matériau qui la compose pour venir au contact avec la chaussée à neuf est au moins égale à 50 et au plus égale à 56.

3. Bande de roulement (1) selon l'une des revendications 1 ou 2 **caractérisée en ce que** la température de transition vitreuse Tg du matériau qui la compose pour venir au contact avec la chaussée à neuf est au moins égale à -16°C et au plus égale à -12°C.

4. Bande de roulement (1) selon l'une des revendications 1 à 3 **caractérisée en ce que** les découpures (3) d'orientation transversale ou oblique ont une largeur au plus égale à 1 mm.

5. Bande de roulement (1) selon l'une des revendications 1 à 4 **caractérisée en ce que** la ou les protubérances d'une découpure sont localisées entre une profondeur égale à 15% de la profondeur maximale de ladite découpure et une profondeur égale à 70% de la profondeur maximale de ladite découpure.

6. Bande de roulement (1) selon l'une des revendications 1 à 5 **caractérisée en ce que** la ou les protubérances sont formées sur une même face délimitant la découpure.

7. Pneu pourvu d'une bande de roulement selon l'une quelconque des revendications 1 à 6 **caractérisé en ce que** le taux de creux volumique transversal, mesurant le taux de creux de l'ensemble des découpures orientées transversalement ou obliquement, est au plus égal au quart du taux d'entaillement volumique global de la sculpture.

## Patentansprüche

1. Laufstreifen (1) für Reifen eines Personenkraftwagens, wobei dieser Laufstreifen aus mindestens einem Material gebildet ist, das beim Rollen des Reifens mittels einer Lauffläche (10), die die Außenfläche des Streifens bildet, mit einer Fahrbahn in Kontakt steht, wobei dieser Laufstreifen Randabschnitte (11) aufweist, die den Laufstreifen axial begrenzen, wobei mindestens einer dieser Randabschnitte mit einer Mehrzahl von quer oder schräg ausgerichteten Ausschnitten (3) mit einer Breite von höchstens gleich 2 mm und einer Tiefe von mindestens gleich 75 % der Dicke des Laufstreifens, der dazu bestimmt ist, abgenutzt zu werden, versehen ist, wobei mehr als die Hälfte der Ausschnitte (3), die auf den Randabschnitten ausgebildet sind, mindestens einen Vorsprung umfassen, der die Breite dieses Ausschnitts (3) auf eine Breite reduziert, die mindestens gleich 0,2 mm und höchstens gleich 0,5 mm ist, wobei dieser Laufstreifen **dadurch gekennzeichnet ist, dass** das Material, das ihn bildet, um im Neuzustand mit der Fahrbahn in Kontakt zu treten, so gewählt ist, dass es die folgenden physischen Merkmale aufweist:
- eine Shore-A-Härte, die gemäß der Norm ASTM 2240 oder DIN 53505 bei der Temperatur von 23 °C gemessen wird, von mindestens gleich 48 und höchstens gleich 57,
- einen Verlust bei 60 °C von mindestens gleich 12 % und höchstens gleich 20 %, Energieverlust bei 60 °C durch erzwungene Energierückfederung, gemessen beim sechsten Aufprall, und dessen Wert, in % ausgedrückt, gleich der Differenz zwischen der zugeführten Energie und der zurückgegebenen Energie bezogen auf die zugeführte Energie ist,
- eine Glasübergangstemperatur Tg, gemessen nach der Norm ASTM D 5992-96, von mindestens gleich -20 °C und höchstens gleich -10 °C.

2. Laufstreifen (1) nach Anspruch 1, **dadurch gekennzeichnet, dass** die Shore-A-Härte des Materials, das ihn bildet, um im Neuzustand mit der Fahrbahn in Kontakt zu treten, mindestens gleich 50 und höchstens gleich 56 beträgt.

3. Laufstreifen (1) nach einem der Ansprüche 1 oder 2, **dadurch gekennzeichnet, dass** die Glasübergangstemperatur Tg des Materials, das ihn bildet, um im Neuzustand mit der Fahrbahn in Kontakt zu treten, mindestens gleich - 16 °C und höchstens gleich -12 °C beträgt.

4. Laufstreifen (1) nach einem der Ansprüche 1 bis 3, **dadurch gekennzeichnet, dass** die quer oder schräg ausgerichteten Ausschnitte (3) eine Breite von höchstens gleich 1 mm aufweisen.

5. Laufstreifen (1) nach einem der Ansprüche 1 bis 4, **dadurch gekennzeichnet, dass** sich der oder die Vorsprünge eines Ausschnitts zwischen einer Tiefe von gleich 15 % der maximalen Tiefe des Ausschnitts und einer Tiefe von gleich 70 % der maximalen Tiefe des Ausschnitts befinden.

6. Laufstreifen (1) nach einem der Ansprüche 1 bis 5, **dadurch gekennzeichnet, dass** der oder die Vorsprünge auf einer selben Seite ausgebildet sind, die den Ausschnitt begrenzt.

7. Reifen mit einem Laufstreifen nach einem der Ansprüche 1 bis 6, **dadurch gekennzeichnet, dass** die Quer-Volumenvertiefungsrate, die die Vertiefungsrate der gesamten quer oder schräg ausgerichteten Ausschnitte misst, höchstens gleich dem Viertel der Gesamt-Volumeneinkerbungsrate der Formung ist.

## Claims

1. Tread (1) for a passenger vehicle tyre, this tread being formed from at least one material that comes into contact with a road surface while the tyre is running via a tread surface (10) forming the external surface of the tread, this tread having edge parts (11) axially delimiting said tread, at least one of these edge parts being provided with a plurality of transversely or obliquely oriented cuts (3) having a width at most equal to 2 mm and a depth at least equal to 75% of the thickness of the tread that is intended to be worn away, more than half of the cuts (3) formed in the edge parts comprising at least one protuberance that locally reduces the width of this cut (3) to a width at least equal to 0.2 mm and at most equal to 0.5 mm, this tread being **characterized in that** the material of which it is made and which is intended to come into contact with the road surface in the new state is chosen to have the following physical characteristics:
- a Shore A hardness, measured in accordance with standard ASTM 2240 or DIN 53505, at a temperature of 23°C, at least equal to 48 and at most equal to 57,
- a loss at 60°C at least equal to 12% and at most equal to 20%, a loss of energy at 60°C by rebound at a set energy level measured at the sixth impact and the value of which, expressed in %, is equal to the difference between the energy supplied and the energy returned, divided by the energy supplied,
- a glass transition temperature Tg, measured in accordance with standard ASTM D 5992-96, at least equal to -20°C and at most equal to -10°C.

2. Tread (1) according to Claim 1, **characterized in that** the Shore A hardness of the material of which it is made and which is intended to come into contact with the road surface in the new state is at least equal to 50 and at most equal to 56.

3. Tread (1) according to either of Claims 1 and 2, **characterized in that** the glass transition temperature Tg of the material of which it is made and which is intended to come into contact with the road surface in the new state is at least equal to -16°C and at most equal to -12°C.

4. Tread (1) according to one of Claims 1 to 3, **characterized in that** the transversely or obliquely oriented cuts (3) have a width at most equal to 1 mm.

5. Tread (1) according to one of Claims 1 to 4, **characterized in that** the protuberance(s) of a cut is/are located between a depth equal to 15% of the maximum depth of said cut and a depth equal to 70% of the maximum depth of said cut.

6. Tread (1) according to one of Claims 1 to 5, **characterized in that** the protuberance(s) is/are formed in one and the same face delimiting the cut.

7. Tyre provided with a tread according to any one of Claims 1 to 6, **characterized in that** the transverse volumetric void ratio, measuring the void content in all of the transversely or obliquely oriented cuts, is at most equal to one quarter of the overall volumetric void ratio of the tread pattern.
